# EUROPÄISCHE PATENTSCHRIFT

(11) **EP 1 762 835 B1**
(45) Veröffentlichungstag und Bekanntmachung des Hinweises auf die Patenterteilung: **04.04.2012**
(21) Anmeldenummer: 06017483.6
(22) Anmeldetag: 23.08.2006
(51) Int. Cl.: G01N 1/38, G01N 1/40, C22B 1/00, C22B 11/02, G01N 1/28

(54) **Homogenisierungs- und ggf. Analyse-Verfahren bei der Aufarbeitung feuchter edelmetallhaltiger Aufarbeitungsmaterialien mit unbekanntem Edelmetallgehalt**
Homogenisation method and, if applicable, analysis method for use in the reconditioning of moist reconditioning materials containing precious metal with unknown precious metal content
Procédé d'homogénéisation et le cas échéant d'analyse lors de la préparation de matériaux de renforcement humides contenant du métal précieux à teneur en métal précieux inconnue

(30) Priorität: 09.09.2005 DE 102005043286; 14.10.2005 DE 102005049702
(43) Veröffentlichungstag der Anmeldung: 14.03.2007
(73) Patentinhaber: Heraeus Precious Metals GmbH & Co. KG, 63450 Hanau (DE)
(72) Erfinder: Mock, Christian, Dr., Shanghai 201702 (CN); Meyer, Horst, Dr., 63674 Altenstadt (DE); Grehl, Matthias, Dr., 60388 Frankfurt (DE); Schlessmann, Jochen, 63825 Blankenbach (DE); Stettner, Martin, 63674 Altenstadt (DE)
(74) Vertreter: Kühn, Hans-Christian

(56) Entgegenhaltungen:
- WO-A-89/04475
- WO-A-03/038405
- WO-A-2005/058453
- DE-C1- 19 942 519
- HAGELUEKEN C ET AL: "SUBSTANTIAL OUTFLOWS OF PLATINUM GROUP METALS IDENTIFIED SPENT AUTOCATALYSTS ARE SYSTEMATICALLY WITHDRAWN FROM THE EUROPEAN MARKET SYSTEMLUECKEN BEIM KAT-RECYCLING - ALTAUTOKATALYSATOREN WERDEN SYSTEMATISCH DEM EUROPAEISCHEN RECYCLINGKREISLAUF ENTZOGEN/" 2003, ERZMETALL, GMBD - MEDIENVERLAG, CLAUSTHAL-ZELLERFELD, DE, PAGE(S) 529-540 , XP001177296 ISSN: 0044-2658 * Seite 537, Spalte 2, Zeile 5 - Zeile 9 *

## Beschreibung

Die Erfindung betrifft Homogenisierungs- und/oder Analyseverfahren bei der Aufarbeitung edelmetallhaltiger, pulveriger, wasserfeuchter Aufarbeitungsmaterialien mit unbekanntem Edelmetallgehalt (im folgenden: "charge"), besonders verbrauchter Katalysatoren.

Nach der Patentanmeldung WO 03/038405 A1 (Johnson Matthey) besteht ein Bedarf nach verbesserten Verfahren der Probennahme und Analyse von wertstoffhaltigen Abfällen. Dort wird vorgeschlagen, den Abfall in einer Flüssigkeit zu dispergieren und kontinuierlich einen geringen Teil der Masse zur Analyse abzuziehen.

Hagelüken et al. beschreiben in ERZMETALL 56, 529-40 (2003) auf Seite 537, dass verbrauchte Abgaskatalysatoren nach Entfernung der Metallhülle beim Edelmetallaufarbeiter durch Mahlen und Vermischen homogenisiert werden und representative Proben zur Bestimmung des Edelmetallgehalts genommen werden. Bei der anschließenden Aufarbeitung werden in der Regel 95-98% des Pt- und 80-85% des Rh-Gehalts wiedergewonnen.

Es wurde festgestellt, dass sich mit Hilfe Feuchtigkeit bindender Mittel die Feuchtigkeit in den angelieferten Chargen soweit binden lässt, dass sie sich mit Hilfe geeigneter Misch- und Zerteilungsaggregate annähernd trocken homogenisieren lassen.

Die Erfindung betrifft somit ein Verfahren nach Anspruch 1.

Es entsteht ein relativ trockenes, fließfähiges Pulver. Anschließend kann ein Zwischenmuster gezogen werden, welches nach einem Trocknungsprozess in die einzelnen Endmuster aufgeteilt werden kann.

Für die Analyse ist die Menge an Feuchtigkeit bindendem Mittel dabei vorbekannt oder vorberechnet, so dass nach der Analyse der tatsächliche Wertstoffgehalt des angelieferten Abfalls feststeht.

Die Erfindung betrifft somit auch ein Homogenisierungs- und Analyseverfahren nach Anspruch 2.

Die Erfindung betrifft ferner vorteilhafte Ausführungsformen beider Verfahren gemäß den weiteren Ansprüchen.

In einer bevorzugten Ausführungsform wird der angelieferten Charge eine vorbekannte bzw. vorberechnete Menge eines wasserbindendes Mittels, z.B. eines organischen Polymers, besonders eines vernetzten Polyacrylats oder eines sogenannten Superabsorbers zugesetzt.

Zweck ist es, die Feuchtigkeits- bzw. Wasseranteile der Charge, die von etwa 20 bis 80% betragen können, weitestgehend zu binden.

Das Verfahren bezieht sich in einer besonders bevorzugten Ausführungsform auf kohlehaltige Katalysatorrückstände (im folgenden "Kohlen"), die in feuchtem Zustand angeliefert werden. Das Material muss analysiert werden, damit der Anlieferer über den Wertstoffgehalt informiert ist. Zur Probenentnahme muss das Material möglichst homogen sein.

Aus der Mischung wird/werden daher bevorzugt während des Rühr- bzw Mischvorgangs eine oder mehrere Proben entnommen.

Das Gemisch wird zweckmäßig in einem Mischer mit Schneidrotoren intensiv gemischt.

Das/die entnommenen Zwischenmuster wird/werden zweckmäßig getrocknet, ggf. vereinigt und weiter heruntergeteilt, z.B. mittels Rotationsteiler. Die getrockneten Proben haben dabei vorzugsweise eine Partikelgröße von < 500 µm, besonders bevorzugt < 100 µm.

Nach der Analyse, die nach an sich bekannten Methoden erfolgt, können die entnommenen Proben mit der restlichen Charge dem Edelmetallrecycling zugeführt werden.

Die Feuchtigkeit kann durch Wasser und/oder organische Lösungsmittel verursacht sein.

Als Feuchtigkeit bindendes Mittel kommt im Fall von organischen Lösungsmitteln z.B. Aktivkohle in Frage. Handelt es sich bei der Feuchtigkeit um Wasser, dann sind übliche wasserbindende Mittel wie Zeolithe geeignet. Bevorzugt werden als wasserbindende Mittel sog. Superabsorber eingesetzt.

Superabsorber sind schwach vernetzte, unlösliche Polymere, die in der Lage sind; ein Vielfaches ihres Gewichts an Wasser oder wässriger Lösung aufzunehmen. Dabei quellen sie stark auf, es entsteht ein "hydrogel". Zur Bildung von Hydrogelen sind alle vernetzten Polymere in der Lage, die genügend polare Gruppen enthalten, z.B. Polyacrylamid, Polyvinylpyrollidon sowie natürliche Polymere wie Amylopektin, Gelatine und Cellulose. So werden z.B. Stärke-Acrylnitril Propfcopolymere eingesetzt. Polymere mit ionischen Gruppen sind in der Lage, besonders viel Wasser aufzunehmen, da sie infolge der Abstoßung zwischen den einzelnen (gleich geladenen) ionischen Gruppen eine gestreckte Form einnehmen. So können sich die Wassermoleküle besonders gut um die lonen gruppieren und ihre Lage durch Wechselwirkungen wie Wasserstoffbrücken und Anordnung der Dipole stabilisieren.

Handelt es sich um Copolymere aus Acrylsäure (Propensäure, C₃H₄O₂) und Natriumacrylat (Natriumsalz der Acrylsäure, NaC₃H₃O₂), wobei das Verhältnis der beiden Monomere zueinander variieren kann, wird zusätzlich ein so genannter Kernvernetzer (Core-Cross-Linker, CXL) der Monomerlösung zugesetzt, der die gebildeten langkettigen Polymermoleküle stellenweise untereinander durch chemische Brücken verbindet (sie "vernetzt"). Durch diese Brücken wird das Polymer wasserunlöslich. Beim Eindringen von Wasser oder wässrigen Salzlösungen in den Polymerpartikel quillt er auf und strafft auf molekularer Ebene dieses Netzwerk - das Wasser kann ohne Hilfe nicht mehr entweichen.

Nach heutigem Entwicklungsstand nennt man das Produkt in dieser Form "Basispolymer", da im Laufe der Jahre die Anforderungen an den Superabsorber gewachsen sind und weitere Veredelungsschritte angewandt werden. Als wichtigster sei die so genannte Oberflächen-Nachvernetzung (Surface-Cross-Linking, SXL) genannt. Dabei wird eine weitere Chemikalie auf die Oberfläche eines jeden Partikels aufgebracht, und durch eine unter Hitze stattfindende Reaktion wird ein zweites Netzwerk nur auf der äußeren Schicht des Korns geknüpft. Dieses verhindert durch eine ebenfalls eintretende Straffung bei Flüssigkeitsabsorption selbst unter Druck ein Entweichen der aufgenommenen Lösung.

Für die Zwecke der Erfindung sind die Superabsorber der ersten Generation jedoch ausreichend. Da allerdings auch der Einsatz von Superabsorber enthaltendem Produktionsabfall vorgesehen sein kann, können auf diese Weise auch Superabsorber neuerer Generationen verwandt werden.

Die Superabsorber können auch gemischt mit Aktivkohle eingesetzt werden.

### Anwendungsbeispiel für eine Ausführungsform

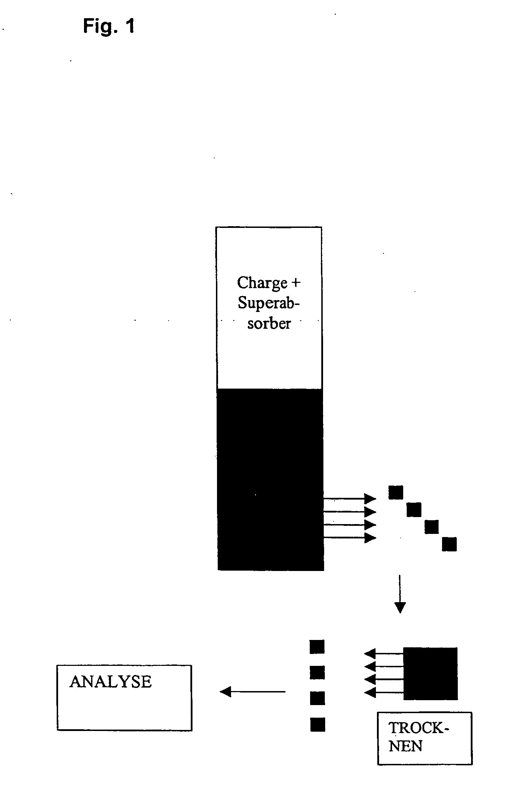

In Fig. 1 ist ein Schema für eine beispielhafte Ausführungsform des Verfahrens gezeigt. Edelmetallhaltiger, verbrauchter Katalysator mit unbekanntem Edelmetallgehalt ("Charge") wird mit einer definierten Menge Superabsorber vermischt, und Einzelproben werden gezogen. Die vereinigten Einzelproben werden getrocknet, wieder geteilt und analysiert. Die getrockneten Proben haben eine Partikelgröße < 100 µm. Dadurch, dass die Superabsorbermenge zur Aufnahme des Wassers vorberechnet wurde und bekannt ist, kann der Edelmetallgehalt der Probe berechnet werden.

## Patentansprüche

1. Homogenisierungsverfahren bei der Aufarbeitung edelmetallhaltiger, Feuchtigkeit enthaltender Aufarbeitungsmaterialien mit unbekanntem Edelmetallgehalt (im folgenden "Charge"), **dadurch gekennzeichnet, dass** ein Feuchtigkeit bindendes Mittel zugegeben wird und danach die Charge unter Zerkleinern gegebenenfalls vorhandener Aggregate zu einem fließfähigen und homogenen Pulver vermischt wird.

2. Homogenisierungsverfahren nach Anspruch 1, wobei die Menge des Feuchtigkeit bindenden Mittels vorbekannt oder vorberechnet ist, und wobei danach
* A zunächst eine oder mehrere Proben entnommen wird/werden,
* B die Probe(n) getrocknet wird (werden),
* C die Probe(n) optional weiter heruntergeteilt wird (werden),
* D die Probe(n) analysiert wird (werden) und der Edelmetallinhalt der Charge auf der Basis der Daten berechnet wird.

3. Verfahren nach Anspruch 1 oder 2, wobei das Feuchtigkeit bindende Mittel ein wasserbindendes Mittel ist.

4. Verfahren nach Anspruch 3, wobei das wasserbindende Mittel ein organisches Polymer ist.

5. Verfahren nach Anspruch 4, wobei das organische Polymer ein quervernetztes Polyacrylat ist.

6. Verfahren nach Anspruch 3, 4 oder 5, wobei das wasserbindende Mittel ein Superabsorber ist.

7. Verfahren nach Anspruch 1, wobei das Feuchtigkeit bindende Mittel Aktivkohle ist.

8. Verfahren nach Anspruch 1, wobei das Feuchtigkeit bindende Mittel eine Mischung von Aktivkohle und einem Superabsorber ist

9. Verfahren nach einem der vorstehenden Ansprüche, wobei die Charge aus edelmetallhaltigen verbrauchten Katalysatoren besteht.

10. Verfahren nach einem der vorstehenden Ansprüche, wobei die Charge einen Feuchtegehalt von 20-80% Gew% aufweist.

11. Verfahren nach Anspruch 2, wobei in Schritt A eine representativer Teil der Charge entnommen wird.

12. Verfahren nach Anspruch 2, wobei während des Mischvorgangs aus der Charge Einzelproben entnommen werden und die vereinigten Einzelproben anschließend getrocknet werden, um sie nachfolgend zu mischen und in weitere Einzelproben zu zerteilen.

13. Verfahren nach Anspruch 12, wobei das Zerteilen mittels Rotationsteiler erfolgt.

14. Verfahren nach einem der Ansprüche 9-13, wobei der verbrauchte Katalysator Edelmetalle auf Aktivkohle enthält.

15. Verfahren nach einem der vorstehenden Ansprüche 2-14, wobei die getrocknete Probe B ein Feststoff mit einer Partikelgröße < 500 µm ist.

16. Verfahren nach einem der vorstehenden Ansprüche 2-15, wobei die getrocknete Probe B ein Feststoff mit einer Partikelgröße < 100 µm ist.

17. Verfahren nach einem der vorstehenden Ansprüche, wobei der Misch- und Zerkleinerungsvorgang in einem Intensivmischer mit Schneidrotoren stattfindet.

## Claims

1. Homogenisation method for the re-conditioning of noble metal-containing, moisture-containing re-conditioning materials with unknown noble metal content (hereinafter called "batch"), **characterised in that** a moisture-binding agent is added and then the batch is mixed, and aggregates that may be present are disintegrated, to form a flowable and homogeneous powder.

2. Homogenisation method according to claim 1, whereby the quantity of the moisture-binding agent is known or calculated ahead of time, and whereby, then,
- A firstly, one or more samples is/are taken;
- B the sample(s) is/are then dried;
- C the sample(s) is/are optionally sub-divided further;
- D the sample(s) is/are analysed and the noble metal content of the batch is calculated based on such data.

3. Method according to claim 1 or 2, whereby the moisture-binding agent is a water-binding agent.

4. Method according to claim 3, whereby the water-binding agent is an organic polymer.

5. Method according to claim 4, whereby the organic polymer is a cross-linked polyacrylate.

6. Method according to claim 3, 4 or 5, whereby the water-binding agent is a superabsorber.

7. Method according to claim 1, whereby the moisture-binding agent is activated charcoal.

8. Method according to claim 1, whereby the moisture-binding agent is a mixture of activated charcoal and a superabsorber.

9. Method according to any one of the preceding claims, whereby the batch consists of noble metal-containing spent catalysts.

10. Method according to any one of the preceding claims, whereby the batch has a moisture content of 20-80 % by weight.

11. Method according to claim 2, whereby a representative portion of the batch is taken in step A.

12. Method according to claim 2, whereby individual samples are taken from the batch during the mixing process and the combined individual samples are then dried for subsequent mixing and sub-dividing into further individual samples.

13. Method according to claim 12, whereby the disintegration proceeds by means of a rotary divider.

14. Method according to any one of the claims 9-13, whereby the spent catalyst contains noble metals on activated charcoal.

15. Method according to any one of the preceding claims 2-14, whereby the dried sample B is a solid substance having a particle size < 500 µm.

16. Method according to any one of the preceding claims 2-15, whereby the dried sample B is a solid substance having a particle size < 100 µm.

17. Method according to any one of the preceding claims, whereby the mixing and disintegration process proceeds in an intensive mixer with chopping rotors.

## Revendications

1. Procédé d'homogénéisation lors du retraitement de matériaux de retraitement à teneur en métaux précieux, contenant de l'humidité avec une teneur en métaux précieux inconnue (« charge » dans la suite), **caractérisé en ce qu'**un agent fixant l'humidité est ajouté et la charge est ensuite mélangée avec broyage des agrégats éventuellement présents en une poudre fluide et homogène.

2. Procédé d'homogénéisation selon la revendication 1, dans lequel la quantité d'agent fixant l'humidité est connue au préalable ou calculée au préalable, et dans lequel ensuite
* A un ou plusieurs échantillons est/sont d'abord prélevé(s),
* B le(s) échantillon(s) est/sont séché(s),
* C le(s) échantillon(s) est/sont en option davantage subdivisé(s),
* D le(s) échantillon(s) est/sont analysé(s) et le contenu en métaux précieux de la charge est calculé en fonction des données.

3. Procédé selon la revendication 1 ou 2, dans lequel l'agent fixant l'humidité est un agent fixant l'eau.

4. Procédé selon la revendication 3, dans lequel l'agent fixant l'eau est un polymère organique.

5. Procédé selon la revendication 4, dans lequel le polymère organique est un polyacrylate à réticulation croisée.

6. Procédé selon la revendication 3, 4 ou 5, dans lequel l'agent fixant l'eau est un superabsorbeur.

7. Procédé selon la revendication 1, dans lequel l'agent fixant l'humidité est du charbon actif.

8. Procédé selon la revendication 1, dans lequel l'agent fixant l'humidité est un mélange de charbon actif et d'un superabsorbeur.

9. Procédé selon l'une quelconque des revendications précédentes, dans lequel la charge se compose de catalyseurs consommés à teneur en métaux précieux.

10. Procédé selon l'une quelconque des revendications précédentes, dans lequel la charge présente une teneur humide de 20 à 80 % en poids.

11. Procédé selon la revendication 2, dans lequel une partie représentative de la charge est prélevée à l'étape A.

12. Procédé selon la revendication 2, dans lequel des échantillons individuels sont prélevés de la charge pendant le processus de mélange et les échantillons individuels réunis sont ensuite séchés pour les mélanger ensuite et les diviser en échantillons individuels supplémentaires.

13. Procédé selon la revendication 12, dans lequel la division s'effectue au moyen d'un séparateur rotatif.

14. Procédé selon l'une quelconque des revendications 9 à 13, dans lequel le catalyseur consommé contient des métaux précieux sur du charbon actif.

15. Procédé selon l'une quelconque des revendications précédentes 2 à 14, dans lequel l'échantillon séché B est un solide avec une dimension particulaire < 500 µm.

16. Procédé selon l'une quelconque des revendications précédentes 2 à 15, dans lequel l'échantillon séché B est un solide avec une dimension particulaire < 100 µm.

17. Procédé selon l'une quelconque des revendications précédentes, dans lequel le processus de mélange et de broyage a lieu dans un mélangeur intensif avec rotors de coupe.
